# EUROPÄISCHE PATENTSCHRIFT

(11) **EP 2 616 987 B1**
(45) Veröffentlichungstag und Bekanntmachung des Hinweises auf die Patenterteilung: **13.01.2016**
(21) Anmeldenummer: 10779533.8
(22) Anmeldetag: 11.11.2010
(51) Int. Cl.: G06K 7/00

(54) **VERFAHREN UND EINRICHTUNG ZUM AUFBAU EINER KOMMUNIKATION ZWISCHEN EINEM RFID-LESEGERÄT UND EINEM RFID-TRANSPONDER**
METHOD AND DEVICE FOR ESTABLISHING COMMUNICATION BETWEEN A RFID READER AND A RFID TRANSPONDER
PROCÉDÉ ET DISPOSITIF D'ÉTABLISSEMENT D'UNE COMMUNICATION ENTRE UN APPAREIL DE LECTURE RFID ET UN TRANSPONDEUR RFID

(43) Veröffentlichungstag der Anmeldung: 24.07.2013
(73) Patentinhaber: Siemens Aktiengesellschaft, 80333 München (DE)
(72) Erfinder: HORST, Dieter, 90556 Cadolzburg (DE); WEINLÄNDER, Markus, 91230 Happurg (DE)
(86) Internationale Anmeldenummer: PCT/EP2010/067296
(87) Internationale Veröffentlichungsnummer: WO 2012/062368

(56) Entgegenhaltungen:
- EP-A1- 1 983 469
- US-A1- 2007 052 524
- US-A1- 2008 122 581

## Beschreibung

Die Erfindung betrifft ein Verfahren für den Aufbau einer Kommunikation zwischen einer Einrichtung zum Lesen und Beschreiben eines RFID-Transponders und einem RFID-Transponder gemäß dem Oberbegriff des Patentanspruchs 1, und eine Einrichtung zum Lesen und Beschreiben eines RFID-Transponders gemäß dem Oberbegriff des Patentanspruchs 7.

In industriellen Produktionsanlagen und bei anderen Anwendungen werden häufig berührungslos les- und schreibbare Etiketten, die sog. RFID-Transponder, eingesetzt. Zur Kommunikation mit diesen RFID-Transpondern werden spezielle Einrichtungen verwendet, die häufig als RFID-Lesegeräte oder kurz "Reader" bezeichnet werden.

Für die Kommunikation zwischen den RFID-Transpondern und den Einrichtungen (Lesegeräte) werden dafür vorgesehene bzw. reservierte Funkkanäle verwendet, die in verbindlichen Normen oder Standards festgelegt sind. Die Anzahl der verfügbaren Kanäle ist begrenzt; bei den hier vorzugsweise betrachteten UHF-RFID-Anordnungen sind beispielsweise in Europa vier Funkkanäle reserviert.

Insbesondere bei industriellen Anwendungen ist die Ausbreitung der verwendeten elektromagnetischen Wellen nicht ideal, d.h., dass beispielsweise durch Reflexionen an metallischen Oberflächen und durch Gegenstände, die eine Ausbreitung von Funkwellen behindern, eine Mehrwege-Ausbreitung der Funkwellen auftreten kann, wodurch es an einigen Stellen im betrachteten Raum zu Interferenzen der unterschiedlichen Signalanteile kommen kann. Die Lage der resultierenden Minima und Maxima hängt dabei zum Einen von dem räumlichen Bezug des Senders, des Empfängers und der reflektierenden bzw. absorbierenden Materialien ab, und zum Anderen von der Sendefrequenz bzw. Wellenlänge, also dem verwendeten Funkkanal. Kurz gesagt, können nicht zu jeder Zeit bzw. an jedem Ort alle Funkkanäle benutzt werden, sondern nur ein Teil der verfügbaren Kanäle. Darüber hinaus kann sich die Situation auch im Laufe der Zeit ändern, beispielsweise durch eine Bewegung des RFID-Transponders, durch eine Bewegung eines reflektierenden oder absorbierenden Elementes (beispielsweise ein Fahrzeug) etc.

Um dem Umstand Rechnung zu tragen, dass einzelne der verfügbaren Funkkanäle gestört sein können, wird der verwendete Funkkanal oft nach Ablauf einer in den erwähnten Standards und Normen definierten maximalen Dauer (Belegungsdauer) gewechselt. D.h., dass nach Ablauf der maximalen Belegungsdauer nach einem starren Schema auf den nächsten bzw. einen anderen Funkkanal gewechselt wird. Anstelle des Wechsels in einem festgelegten Schema kann der nächste Funkkanal auch zufällig, also beispielsweise durch Verwendung eines Pseudo-Zufallsgenerators, ausgewählt werden.

Durch den zwangsweisen Wechsel des Funkkanals nach Ablauf der maximalen Belegungsdauer ist auch in den Fällen, in denen einzelne Funkkanäle nicht nutzbar sind, sichergestellt, dass nach (ggf. mehrfachem) Ablauf der maximalen Belegungsdauer ein nutzbarer Funkkanal, so denn überhaupt einer existiert, aufgefunden wird, so dass eine Kommunikation zwischen einer Einrichtung (Lesegerät) und einem RFID-Transponder zustande kommen kann. Bei einer üblichen maximalen Belegungsdauer von 4 Sekunden und bei 4 definierten Funkkanälen bedeutet das in einem Beispiel, in dem nur einer der vier Funkkanäle störungsfrei nutzbar ist, dass im ungünstigsten Fall erst nach etwa 12 Sekunden der einzige verfügbare Funkkanal aufgefunden werden kann.

Da eine Zeitdauer dieser Größenordnung für viele Anwendungen nicht akzeptabel ist, kann beispielsweise die maximale Belegungsdauer je Funkkanal kürzer gewählt werden, wodurch ein schnelleres "Durchsuchen" der Funkkanäle nach einem verfügbaren bzw. benutzbaren Funkkanal gegeben ist. Dies hat jedoch zum Nachteil, dass auch bei funktionierender, etablierter Kommunikation ein häufigerer Kanalwechsel vorgenommen werden muss. Da ein Kanalwechsel immer mit einer sog. "Totzeit" verbunden ist, während der keine Nutzdaten zwischen der Einrichtung (Lesegerät) und einem RFID-Transponder ausgetauscht werden können, ist also eine Verkürzung der maximalen Belegungsdauer auch mit einer Verringerung der Leistungsfähigkeit ("Performance") verbunden.

Eine alternative Möglichkeit zur Lösung des Problems ist darin bekannt, dass bei einer Konfiguration bzw. Projektierung der betrachteten Anordnung feste Kanäle vorgegeben werden, von denen bekannt ist, dass mittels dieser Funkkanäle eine Kommunikation möglich ist. Solche Feststellungen können beispielsweise durch Messungen ("Einmessung") getroffen werden. Nachteilig ist jedoch, dass spätere Änderungen der örtlichen Gegebenheiten, beispielsweise durch eine Änderung der räumlichen Anordnung von reflektierenden Elementen, der RFID-Transponder, oder durch nachträglich installierte weitere Lesegeräte, eine erneute Einmessung und damit eine erneute Festlegung der zu verwendenden Funkkanäle vorgenommen werden muss.

Eine weitere, gebräuchliche Vorgehensweise zur Lösung des Problems besteht darin, im Umfeld der RFID-Anordnung Dämpfungsmaterial vor reflektierenden, metallischen Gegenständen und Gehäusen vorzusehen, um Reflexionen zu vermindern und damit die Anzahl und die Ausprägung der lokalen Minima, bei denen eine Kommunikation nicht möglich ist, zu verringern. Das Einbringen von Dämmmaterial ist jedoch teuer, nicht überall technisch möglich, und führt auch nicht in allen Fällen zum vollständigen Erfolg.

Aus der EP 1 983 469 A1 ist ein Verfahren für den Aufbau einer Kommunikation zwischen einer Einrichtung zum Lesen und Beschreiben eines RFID-Transponders und einem RFID-Transponder bekannt, bei dem eine Anzahl Funkkanäle für die drahtlose Kommunikation zwischen der Einrichtung und dem RFID-Transponder vorgesehen ist. Die Einrichtung ist für die wechselweise Nutzung jeweils eines der Funkkanäle einrichtet. Bei der Beendigung der Kommunikation über einen gewählten Funkkanal wird überprüft, ob die Beendigung auf normalem Wege erfolgt. Im Falle einer unnormalen Beendigung wird der Kanal gewechselt.

Die US 2007/0052524 A1 offenbart ein Verfahren für den Aufbau einer Kommunikation zwischen einer Einrichtung zum Lesen und Beschreiben eines RFID-Transponders und einem RFID-Transponder, bei dem eine Anzahl Funkkanäle für die drahtlose Kommunikation zwischen der Einrichtung und dem RFID-Transponder vorgesehen ist. Die Einrichtung ist für die wechselweise Nutzung jeweils eines der Funkkanäle einrichtet. Abhängig von einer Statusinformation, die von einer Abfrageeinheit ermittelt wird und eine Information über die Dauer, die ein angefragter Kanal belegt sein wird, wird eine Entscheidung getroffen, ob dieser oder ein anderer Kanal ausgewählt wird.

Die US 2008/0122581 A1 offenbart ein Verfahren für den Aufbau einer Kommunikation zwischen einer Einrichtung zum Lesen und Beschreiben eines RFID-Transponders und einem RFID-Transponder, bei dem das Verfahren Listen Before Talk (LBT) zum Einsatz kommt.

Es ist daher eine Aufgabe der vorliegenden Erfindung, die Beeinträchtigungen bei RFID-Transponder-Anordnungen in Folge nicht-nutzbarer Funkkanäle zu verringern.

Es ist dabei ein Kerngedanke der erfindungsgemäßen Lösung des Problems, den Wechsel der Funkkanäle von einer tatsächlich möglichen Kommunikation zwischen einem RFID-Transponder ("RFID-Tag") und dem Lesegerät ("Einrichtung", "Reader") abhängig zu machen. Dabei wird erfindungsgemäß vorgeschlagen, bei einem erfolglosen Verbindungsversuch bzw. KommunikationsVersuch unmittelbar zu einem anderen Funkkanal zu wechseln, während bei einer erfolgreichen Kommunikation der dabei verwendete Funkkanal bis zum Ablauf seiner maximalen Belegungsdauer beibehalten werden kann.

Zur Lösung der Aufgabe wird insbesondere ein Verfahren nach Patentanspruch 1 und eine Einrichtung nach Patentanspruch 7 vorgeschlagen.

Dabei wird ein Verfahren für den Aufbau einer Kommunikation zwischen einer Einrichtung zum Lesen und Beschreiben eines RFID-Transponders und einem RFID-Transponder vorgeschlagen, wobei eine Anzahl Funkkanäle für die drahtlose Kommunikation zwischen der Einrichtung und dem RFID-Transponder vorgesehen ist, wobei die Einrichtung für die wechselweise Nutzung jeweils eines der Funkkanäle einrichtet ist, und wobei eine maximale Dauer einer jeweiligen ununterbrochenen Nutzung der Funkkanäle definiert ist. Dabei wird im Zuge eines Aufbaus einer Kommunikation zwischen der Einrichtung und dem RFID-Transponder in dem Fall, in dem der Aufbau der Kommunikation scheitert, unmittelbar ein Wechsel des Funkkanals vorgenommen und ein erneuter Versuch zum Aufbau der Kommunikation gestartet, wobei im Falle eines erfolgreichen Aufbaus der Kommunikation der dabei verwendete Funkkanal möglichst lange, aber höchstens bis zum Ablauf der maximalen Dauer beibehalten wird. Erfindungsgemäß wird im Fall eines erfolgreichen Aufbaus der Kommunikation nach Ablauf der maximalen Belegungsdauer, die für die Nutzung der Funkkanäle definiert ist, der bislang verwendete Funkkanal erneut für die Kommunikation verwendet, wobei vor der Weiternutzung desselben Funkkanals eine Nutzungspause eingehalten wird. Dasselbe gilt auch für den Wieder-Aufbau einer Kommunikationsbeziehung nach einem (meist störungsbedingten) Verbindungs-Abbruch. Durch dieses Verfahren ist auch bei einzelnen, gestörten Funkkanälen ein schneller Aufbau einer Kommunikation gewährleistet, ohne dass die maximale Belegungsdauer der Funkkanäle reduziert werden muss. Somit kann die durch eine Ausschöpfung der vorgegebenen maximalen Belegungsdauer bedingte hohe Performance weiterhin realisiert werden, ohne Nachteile bei Störungen auf einzelnen Funkkanälen in Kauf nehmen zu müssen.

Die Lösung der Aufgabe sieht außerdem eine Einrichtung zum Lesen und Beschreiben eines RFID-Transponders vor, wobei eine Anzahl Funkkanäle für die drahtlose Kommunikation zwischen der Einrichtung und dem RFID-Transponder vorgesehen ist, wobei die Einrichtung für die wechselweise Nutzung jeweils eines der Funkkanäle eingerichtet ist, und wobei eine maximale Dauer einer jeweiligen ununterbrochenen Nutzung der Funkkanäle definiert ist. Dabei ist die Einrichtung derart ausgestaltet, dass im Zuge eines Aufbaus einer Kommunikation zwischen der Einrichtung und dem RFID-Transponder in dem Fall, in dem der Aufbau der Kommunikation scheitert, unmittelbar ein Wechsel des Funkkanals vorgenommen und ein erneuter Versuch zum Aufbau einer Kommunikation gestartet wird, und dass im Falle eines erfolgreichen Aufbaus der Kommunikation der dabei verwendete Funkkanal beibehalten wird, längstens jedoch bis zum Ablauf der maximalen Dauer. Erfindungsgemäß ist die Einrichtung derart ausgestaltet, dass im Falle eines erfolgreichen Aufbaus der Kommunikation nach Ablauf der maximalen Dauer der bislang verwendete Funkkanal erneut für die Kommunikation verwendet wird, und dass nach dem Ablauf der maximalen Dauer und vor der erneuten Verwendung des Funkkanals eine Nutzungspause des Funkkanals abgewartet wird. Durch die vorgeschlagene Einrichtung geschieht das Auffinden eines benutzbaren Funkkanals ohne einen manuellen Eingriff eines Anwenders und funktioniert darüber hinaus auch sicher bei wechselnden Umgebungsbedingungen, beispielsweise bei verändertem Reflexionsverhalten oder bei einer geänderten räumlichen Anordnung. Durch die vorgeschlagene Einrichtung ist es möglich, auch in denjenigen Fällen innerhalb kurzer Zeit einen verfügbaren Funkkanal aufzufinden, in denen eine vergleichsweise lange maximale Belegungsdauer der verfügbaren Funkkanäle vorgegeben ist.

Durch die Weiternutzung des bislang verwendeten Funkkanals entfällt zum Einen der Zeitaufwand, der für den Aufbau einer Kommunikation auf einem anderen Funkkanal, also für einen Wechsel des Funkkanals, benötigt wird. Zum Anderen ist die Wahrscheinlichkeit, dass ein bislang erfolgreich benutzter Funkkanal weiterhin störungsfrei zu benutzen ist, insbesondere bei vergleichsweise "statischen" Betriebsbedingungen vergleichsweise hoch, wogegen bei einem Wechsel des Funkkanals das Risiko besteht, dass dabei ein gestörter Funkkanal ausgewählt wird, was zu einer unerwünschten Verzögerung der Fortsetzung der Kommunikation führen würde.

Vorteilhafte Ausgestaltungen des erfindungsgemäßen Verfahrens bzw. der erfindungsgemäßen Einrichtung sind in den abhängigen Patentansprüchen angegeben. Die hinsichtlich der vorteilhaften Ausgestaltungen des erfindungsgemäßen Verfahrens beschriebenen Merkmale und Vorteile gelten sinngemäß auch für die erfindungsgemäße Einrichtung, und umgekehrt.

Dagegen ist es bei einer störungsbedingten Unterbrechung einer laufenden Kommunikation von Vorteil, wenn ein Wechsel des Funkkanals unmittelbar durchgeführt und somit ein erneuter Aufbau der Kommunikation mittels des nunmehr gewechselten Funkkanals eingeleitet wird, weil die Wahrscheinlichkeit, dass ein neuer bzw. anderer Funkkanal zur Verfügung steht, größer ist, als die Wahrscheinlichkeit, dass die Störung auf dem bislang verwendeten Funkkanal inzwischen nicht mehr fortbesteht.

Das Weiterverwenden eines bestehenden Funkkanals ist besonders bei solchen Anwendungsfällen von Vorteil, in denen zur gleichen Zeit immer nur mit einem einzigen RFID-Transponder Daten auszutauschen sind, wogegen bei Anwendungen, bei denen mehrere RFID-Transponder an einer Kommunikation beteiligt sein müssen, oft nur durch einen zwischenzeitlichen Wechsel auf alle anderen Funkkanäle gewährleistet sein kann, dass auch alle verfügbaren, im Zweifel aber nur auf einem der Funkkanäle erreichbaren Transponder von dem Lesegerät bzw. der Einrichtung erfasst werden.

Insbesondere bei Anwendungsfällen und Anordnungen, bei denen die Umweltbedingungen bzw. die Verfügbarkeiten der Funkkanäle vergleichsweise statisch sind, ist es von Vorteil, wenn eine Statistik über die Nutzbarkeit oder über Störungen der Funkkanäle geführt wird, wobei solche Funkkanäle mit einer statistisch besser Nutzbarkeit bevorzugt zum Aufbau der Kommunikation und/oder bevorzugt nach einem Wechsel des Funkkanals verwendet werden, wogegen statistisch "schlechtere" Funkkanäle erst dann für Versuche eines Verbindungsaufbaus berücksichtigt werden, wenn dies bei den anderen Funkkanälen nicht erfolgreich war. Somit kann die Verwendung einer Statistik zu einer Verringerung der Anzahl erfolgloser Verbindungsversuche führen, wodurch die Gesamt-"Performance" der Anordnung verbessert werden kann.

Ausführungsbeispiele des erfindungsgemäßen Verfahrens werden nachfolgend anhand der Zeichnungen erläutert. Sie dienen gleichermaßen der Erläuterung eines Ausführungsbeispiels einer erfindungsgemäßen Einrichtung.

Dabei zeigen:
- Figur 1: ein Ablaufdiagramm für die Wahl der Funkkanäle beim Aufbau und bei der Fortführung einer Kommunikationsbeziehung zwischen einer Einrichtung und einem RFID-Transponder, und
- Figur 2: ein Zeit-Kanal-Diagramm eines Beispiels beim Ablauf des erfindungsgemäßen Verfahrens.

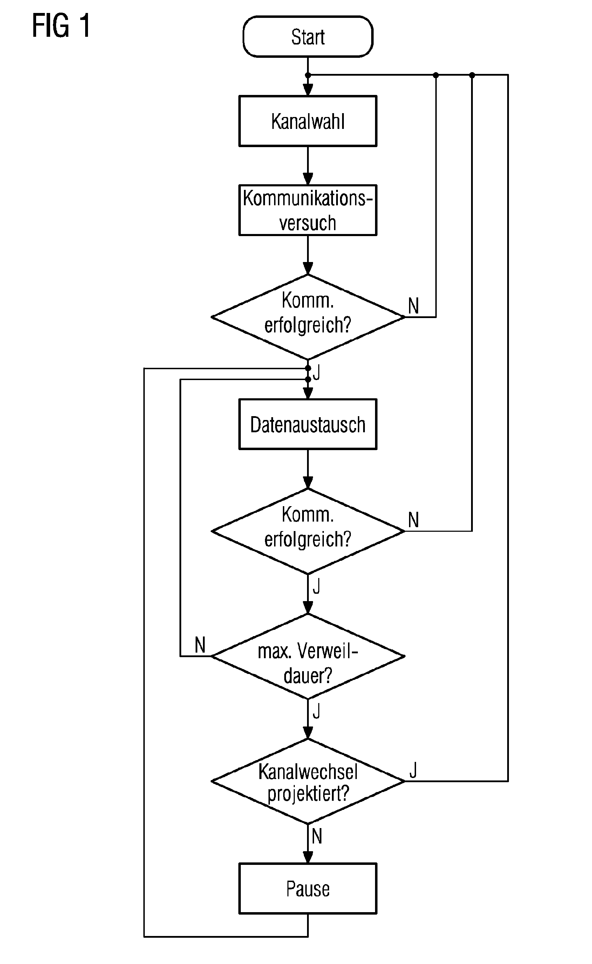

In der Figur 1 ist ein Ablaufdiagramm dargestellt, mit welchem der Aufbau einer Kommunikation zwischen einer Einrichtung ("RFID-Reader") zum Lesen und Beschreiben eines RFID-Transponders und einem oder mehreren RFID-Transpondern schematisch dargestellt ist. Exemplarisch wird hierbei eine UHF-RFID-Anordnung beschrieben; Anwendungen für andere Frequenzbereiche können jedoch ebenso nach dem geschilderten Verfahren betrieben werden.

Das Verfahren beginnt mit dem Auswählen eines zu verwendenden Funkkanals, wobei beispielsweise mit "Funkkanal 1", dem zuletzt genutzten Funkkanal, dem bislang am wenigstens genutzten Funkkanal oder, in einer bevorzugten Ausführungsform, mit demjenigen Funkkanal begonnen wird, der bislang die wenigstens Verbindungsabbrüche, die höchste Übertragungsrate, oder andere statistisch erfassbaren Vorteile aufzuweisen hat. Nun beginnt die Einrichtung mit einem Kommunikationsversuch, d.h. mit dem Aussenden einer Trägerwelle auf dem gewählten Funkkanal, wobei die Trägerwelle mit entsprechenden protokollgemäßen Informationen für den Beginn eines Kommunikationsaufbaus moduliert ist. Nach Ablauf einer vorher festgelegten Wartezeit wird entschieden, ob der Kommunikationsversuch erfolgreich war, oder nicht. Die Wartezeit ergibt sich dabei aus der Zeitdauer, die erfahrungsgemäß längstens benötigt wird, um auf einem nicht-gestörten Funkkanal mit einem erreichbaren RFID-Transponder eine Kommunikationsbeziehung aufzubauen, wobei diese Zeitspanne im vorliegenden Ausführungsbeispiel wenige Millisekunden beträgt. Falls keine Kommunikationsbeziehung aufgebaut werden konnte, ist entweder überhaupt kein RFID-Transponder innerhalb der Reichweite der Einrichtung vorhanden, oder aber ein etwaig vorhandener RFID-Transponder kann auf dem soeben benutzten Funkkanal nicht erreicht werden, beispielsweise weil er sich, bezogen auf den verwendeten Funkkanal, in einem lokalen Minimum der Funkausbreitung befindet.

Falls jedoch innerhalb der erwähnten Wartezeit eine Rückantwort eines RFID-Transponders empfangen wird, wird von einem erfolgreichen Aufbau der Kommunikation ausgegangen, wonach sich der Regelbetrieb anschließt, also das Lesen und Schreiben der Nutzdaten des RFID-Transponders. Die dabei zu durchlaufenden Kommunikationszyklen werden so lange wiederholt, bis die maximale Dauer der erlaubten ununterbrochenen Nutzung des Funkkanals, auch maximale Verweildauer genannt, erreicht ist. Das weitere Vorgehen hängt dann davon ab, ob ein Kanalwechsel "projektiert" ist, oder nicht. Dies bedeutet, dass beispielsweise bei Anwendungsfällen, bei denen gleichzeitig immer nur die Kommunikation mit einem einzigen RFID-Transponder vorgesehen ist, der bereits erfolgreich genutzte Funkkanal weiter genutzt werden kann. Dann ist also kein Kanalwechsel "projektiert", so dass eine gesetzlich vorgeschriebene Nutzungspause eingelegt wird, wonach die Kommunikation mit dem RFID-Transponder fortgesetzt wird. Ist jedoch ein Kanalwechsel projektiert, was beispielsweise sinnvoll sein kann, um im Laufe der Zeit alle verfügbaren Funkkanäle zu verwenden und dabei weitere RFID-Transponder aufzufinden, wird der Funkkanal gewechselt, und es wird die Kommunikation mit dem RFID-Transponder auf diesen Funkkanal fortgesetzt. Parallel zu dieser Fortsetzung der Nutzung kann auf dem nunmehr gewählten Funkkanal auch nach weiteren RFID-Transpondern gesucht werden, d.h., dass parallel erneute Kommunikationsversuche gestartet werden.

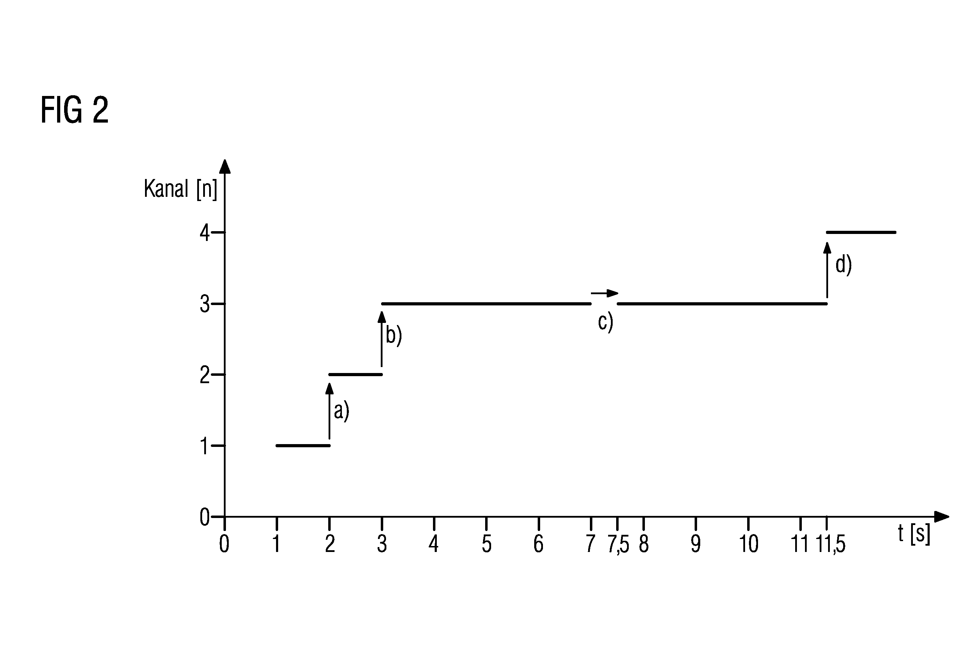

In der Figur 2 ist ein Beispiel einer Kommunikation bzw. eines Kommunikations-Versuchs anhand eines Zeit-Kanal-Diagramms dargestellt. Dabei ist auf der Abszisse die Zeit in Sekunden dargestellt, und auf der Ordinate sind die in Europa für UHF-RFID-Anwendungen vorgesehenen vier Funkkanäle abgetragen. Dabei startet die Einrichtung auf Funkkanal Nr. 1 bei t = 1s (1 Sekunde) mit einem Kommunikationsversuch. Nach Ablauf einer Wartezeit, die hier aus Gründen der Übersichtlichkeit mit einer Sekunde dargestellt ist, stellt die Einrichtung fest, dass keine Kommunikation zu einem RFID-Transponder aufgebaut werden kann. Deshalb wird mit einem Schritt a) bei t = 2s zum Funkkanal Nr. 2 gewechselt, wo ebenfalls ein Kommunikationsversuch stattfindet. Nach einer weiteren Sekunde wird festgestellt, dass auch hier kein Kommunikationsversuch erfolgreich war, so dass mit einem Schritt b) zum Funkkanal Nr. 3 gewechselt wird. Dort ist nun sofort ein Kommunikationsversuch erfolgreich, so dass der Funkkanal Nr. 3 bis zum Ablauf der maximalen Nutzungsdauer (Verweildauer, Dauer) verwendet wird, also vier Sekunden lang, bis t = 7s. In einem Schritt c) wird nun eine gesetzlich vorgeschriebene Nutzungspause des Funkkanals Nr. 3 eingelegt; aus Gründen der Übersichtlichkeit ist diese Nutzungspause als 0,5 Sekunden lang dargestellt. Anschließend wird derselbe Funkkanal Nr. 3 nochmals vier Sekunden lang verwendet, wonach in einem Schritt d) trotz des störungsfreien Betriebs des Funkkanals Nr. 3 zum Funkkanal Nr. 4 gewechselt wird, um gleichzeitig mit dem Weiterbetrieb der laufenden Kommunikation auf dem Funkkanal Nr. 4 nach anderen Transpondern suchen zu können bzw. Kommunikationsversuche zu auf diesem Funkkanal Nr. 4 erreichbaren RFID-Transpondern unternehmen zu können. Beim Wechsel in Schritt d) ist dabei keine Nutzungspause notwendig bzw. vorgeschrieben, weil der Funkkanal Nr. 4 bislang durch die laufende Kommunikation noch überhaupt nicht benutzt wurde.

## Patentansprüche

1. Verfahren für den Aufbau einer Kommunikation zwischen einer Einrichtung zum Lesen und Beschreiben eines RFID-Transponders und einem RFID-Transponder,
wobei eine Anzahl Funkkanäle für die drahtlose Kommunikation zwischen der Einrichtung und dem RFID-Transponder vorgesehen ist,
wobei die Einrichtung für die wechselweise Nutzung jeweils eines der Funkkanäle einrichtet ist, und
wobei eine maximale Dauer einer jeweiligen ununterbrochenen Nutzung der Funkkanäle definiert ist,
wobei im Zuge eines Aufbaus einer Kommunikation zwischen der Einrichtung und dem RFID-Transponder in dem Fall, in dem der Aufbau der Kommunikation scheitert, unmittelbar ein Wechsel des Funkkanals vorgenommen und ein erneuter Versuch zum Aufbau der Kommunikation gestartet wird, und
wobei im Falle eines erfolgreichen Aufbaus der Kommunikation der dabei verwendete Funkkanal längstens bis zum Ablauf der maximalen Dauer beibehalten wird
**dadurch kennzeichnet,**
**dass** im Falle eines erfolgreichen Aufbaus der Kommunikation nach Ablauf der maximalen Dauer der Nutzung der bislang verwendete Funkkanal erneut für die Kommunikation verwendet wird, wobei nach dem Ablauf der maximalen Dauer und vor der erneuten Verwendung des Funkkanals eine Nutzungspause des Funkkanals abgewartet wird.

2. Verfahren nach Anspruch 1,
**dadurch kennzeichnet,**
**dass** bei einer störungsbedingten Unterbrechung einer laufenden Kommunikation ein Wechsel des Funkkanals durchgeführt und erneut ein Aufbau der Kommunikation mittels des gewechselten Funkkanals eingeleitet wird.

3. Verfahren nach einem der vorhergehenden Patentansprüche,
**dadurch kennzeichnet,**
**dass** eine Statistik über die Nutzbarkeit oder über Störungen der Funkkanäle geführt wird, wobei solche Funkkanäle mit in Relation zu anderen Funkkanälen einer statistisch besseren Nutzbarkeit oder mit statistisch weniger Störungen bevorzugt zum Aufbau der Kommunikation und/oder bevorzugt nach einem Wechsel des Funkkanals verwendet werden.

4. Verfahren nach einem der vorhergehenden Patentansprüche,
**dadurch kennzeichnet,**
**dass** zumindest bei Anwendungen, bei denen die gleichzeitige oder quasi-gleichzeitige Kommunikation der Einrichtung zu mehreren RFID-Transpondern vorgesehen ist, innerhalb einer definierten Zeitspanne mehrere oder alle Funkkanäle mindestens einmal für Versuche zum Aufbau einer Kommunikation verwendet werden.

5. Einrichtung zum Lesen und Beschreiben eines RFID-Transponders,
wobei eine Anzahl Funkkanäle für die drahtlose Kommunikation zwischen der Einrichtung und dem RFID-Transponder vorgesehen ist,
wobei die Einrichtung für die wechselweise Nutzung jeweils eines der Funkkanäle eingerichtet ist, und
wobei eine maximale Dauer einer jeweiligen ununterbrochenen Nutzung der Funkkanäle definiert ist,
wobei die Einrichtung derart ausgestaltet ist, dass im Zuge eines Aufbaus einer Kommunikation zwischen der Einrichtung und dem RFID-Transponder in dem Fall, in dem der Aufbau der Kommunikation scheitert, unmittelbar ein Wechsel des Funkkanals vorgenommen und ein erneuter Versuch zum Aufbau einer Kommunikation gestartet wird, und
wobei im Falle eines erfolgreichen Aufbaus der Kommunikation der dabei verwendete Funkkanal längstens bis zum Ablauf der maximalen Dauer beibehalten wird,
**dadurch gekennzeichnet,**
**dass** die Einrichtung derart ausgestaltet ist, dass im Falle eines erfolgreichen Aufbaus der Kommunikation nach Ablauf der maximalen Dauer der bislang verwendete Funkkanal erneut für die Kommunikation verwendet wird, und
**dass** die Einrichtung derart ausgestaltet ist,
**dass** nach dem Ablauf der maximalen Dauer und vor der erneuten Verwendung des Funkkanals eine Nutzungspause des Funkkanals abgewartet wird.

6. Einrichtung nach Anspruch 5,
**dadurch gekennzeichnet,**
**dass** die Einrichtung bei einer störungsbedingten Unterbrechung der Kommunikation zu einem Wechsel des Funkkanals einrichtet ist, wobei ein erneuter Aufbau der Kommunikation eingeleitet wird.

7. Einrichtung nach einem der Patentansprüche 6 oder 7,
**dadurch gekennzeichnet,**
**dass** die Einrichtung zur Führung einer Statistik über die Nutzbarkeit oder über Störungen der Funkkanäle eingerichtet ist, wobei die Einrichtung derart ausgestaltet ist, dass solche Funkkanäle mit in Relation zu anderen Funkkanälen einer statistisch besseren Nutzbarkeit oder mit statistisch wenigen Störungen bevorzugt zum ersten Aufbau einer Kommunikation und/oder bevorzugt zu einem erneuten Aufbau der Kommunikation nach einem Kanalwechsel verwendet werden.

8. Einrichtung nach einem der Patentansprüche 5 bis 7,
**dadurch gekennzeichnet,**
**dass** die Einrichtung zumindest bei Anwendungen, bei denen die gleichzeitige oder quasi-gleichzeitige Kommunikation zu mehreren RFID-Transpondern vorgesehen ist, zur Verwendung mehrerer oder aller Funkkanäle innerhalb einer definierten Zeitspanne für Versuche zum Aufbau einer Kommunikation eingerichtet ist.

## Claims

1. Method for establishing communication between a device for reading and writing to an RFID transponder and an RFID transponder,
wherein a number of radio channels are provided for wireless communication between the device and the RFID transponder,
wherein the device is set up to alternately use one of the radio channels in each case, and
wherein a maximum duration of a respective uninterrupted use of the radio channels is defined,
wherein, while establishing communication between the device and the RFID transponder, if the establishment of communication fails, the radio channel is immediately changed and a new attempt to establish communication is started, and
wherein, if communication is successfully established, the radio channel used in this case is maintained, at the longest, until the expiry of the maximum duration, **characterized in that**
if communication is successfully established, the previously used radio channel is used for communication again after expiry of the maximum duration of use, wherein a pause in the use of the radio channel is awaited after the expiry of the maximum duration and before the radio channel is reused.

2. Method according to Claim 1,
**characterized in that**
in the event of an interference-related interruption in ongoing communication, the radio channel is changed and establishment of communication using the changed radio channel is initiated again.

3. Method according to one of the preceding patent claims,
**characterized in that**
statistics relating to the usability or interference of the radio channels are recorded, wherein those radio channels which have statistically better usability or statistically less interference in relation to other radio channels are preferably used to establish communication and/or are preferably used after the radio channel has been changed.

4. Method according to one of the preceding patent claims,
**characterized in that**
at least in applications in which simultaneous or quasi-simultaneous communication between the device and a plurality of RFID transponders is provided, a plurality of or all radio channels are used at least once for attempts to establish communication within a defined period of time.

5. Device for reading and writing to an RFID transponder,
wherein a number of radio channels are provided for wireless communication between the device and the RFID transponder,
wherein the device is set up to alternately use one of the radio channels in each case, and
wherein a maximum duration of a respective uninterrupted use of the radio channels is defined,
wherein the device is configured such that,
while establishing communication between the device and the RFID transponder, if the establishment of communication fails, the radio channel is immediately changed and a new attempt to establish communication is started, and
wherein, if communication is successfully established, the radio channel used in this case is maintained, at the longest, until the expiry of the maximum duration, **characterized in that**
the device is configured such that,
if communication is successfully established, the previously used radio channel is used for communication again after expiry of the maximum duration,
**in that** the device is configured such that
a pause in the use of the radio channel is awaited after the expiry of the maximum duration and before the radio channel is reused.

6. Device according to Claim 5,
**characterized in that**
in the event of an interference-related interruption in communication, the device is set up to change the radio channel, wherein re-establishment of communication is initiated.

7. Device according to either of Patent Claims 6 and 7,
**characterized in that**
the device is set up to record statistics relating to the usability or interference of the radio channels, wherein the device is configured such that those radio channels which have statistically better usability or statistically less interference in relation to other radio channels are preferably used to initially establish communication and/or are preferably used to re-establish communication following a channel change.

8. Device according to one of Patent Claims 5 to 7,
**characterized in that**
at least in applications in which simultaneous or quasi-simultaneous communication to a plurality of RFID transponders is provided, the device is set up to use a plurality of or all radio channels for attempts to establish communication within a defined period of time.

## Revendications

1. Procédé d'établissement d'une communication entre un dispositif de lecture et d'enregistrement d'un transpondeur RFID et un transpondeur RFID,
dans lequel il est prévu un certain nombre de canaux radioélectriques pour la communication sans fil entre le dispositif et le transpondeur RFID,
dans lequel le dispositif est conçu pour l'utilisation à tour de rôle de respectivement l'un des canaux radioélectriques et
dans lequel une durée maximum d'une utilisation respectivement ininterrompue des canaux radioélectriques est définie,
dans lequel, au cours de l'établissement d'une communication entre le dispositif et le transpondeur RFID, dans le cas où l'établissement de la communication échoue, on effectue immédiatement un changement du canal radioélectrique et on fait débuter un essai renouvelé d'établissement de la communication et
dans lequel, dans le cas où un établissement de la communication réussit, on conserve le canal radioélectrique utilisé tout au plus jusqu'à l'expiration de la durée maximum,
**caractérisé en ce que**,
dans le cas d'un établissement de la communication qui est réussi, on utilise après l'expiration de la durée maximum de l'utilisation, le canal radioélectrique utilisé jusque là, à nouveau pour la communication, dans lequel après l'expiration de la durée maximum et avant l'utilisation renouvelée du canal radioélectrique, on met au repos le canal radioélectrique.

2. Procédé suivant la revendication 1,
**caractérisé**
**en ce que** s'il se produit une interruption due à une panne d'une communication en cours, on effectue un remplacement du canal radioélectrique et on fait débuter à nouveau l'établissement de la communication à l'aide du canal radioélectrique remplacé.

3. Procédé suivant l'une des revendications précédentes,
**caractérisé**
**en ce que** l'on tient une statistique sur la possibilité d'utiliser ou sur les pannes des canaux radioélectriques, en utilisant de préférence pour l'établissement de la communication et/ou, de préférence après un remplacement du canal radioélectrique, les canaux radioélectriques ayant par rapport à d'autres canaux radioélectriques une possibilité d'utilisation meilleure statistiquement ou moins de pannes statistiquement.

4. Procédé suivant l'une des revendications précédentes,
**caractérisé**
**en ce qu'**au moins, dans des applications dans lesquelles il est prévu la communication en même temps ou quasi en même temps du dispositif avec plusieurs transpondeurs RFID, on utilise dans un laps de temps défini plusieurs ou tous les canaux radioélectriques au moins une fois pour des essais d'établissement d'une communication.

5. Dispositif de lecture et d'enregistrement d'un transpondeur RFID,
dans lequel il est prévu un certain nombre de canaux radioélectriques pour la communication sans fil entre le dispositif et le transpondeur RFID,
dans lequel le dispositif est conçu pour l'utilisation à tour de rôle de respectivement l'un des canaux radioélectrique et
dans lequel une durée maximum d'une utilisation respectivement ininterrompue des canaux radioélectriques est définie,
dans lequel le dispositif est conformé de manière à ce que, au cours de l'établissement d'une communication entre le dispositif et le transpondeur RFID, dans le cas où l'établissement de la communication échoue, il s'effectue immédiatement un remplacement du canal radioélectrique et le début d'un essai renouvelé d'établissement de la communication et
dans le cas où l'établissement de la communication réussit, à conserver le canal radioéléctrique utilisé,
tout au plus jusqu'à l'expiration de la durée maximum,
**caractérisé**
**en ce que** le dispositif est conformé de manière à ce que, dans le cas où l'établissement de la communication réussit, après l'expiration de la durée maximum, le canal radioélectrique utilisé jusqu'ici soit utilisé à nouveau pour la communication et
**en ce que** le dispositif est conformé, après l'expiration de la durée maximum et avant l'utilisation renouvelée du canal radioélectrique, de manière à mettre au repos le canal radioélectrique.

6. Dispositif suivant la revendication 5,
**caractérisé en ce que** le dispositif est conçu pour, s'il se produit une interruption de la communication due à une panne, un remplacement du canal radioélectrique en faisant débuter un établissement renouvelé de la communication.

7. Dispositif suivant la revendication 6 ou 7,
**caractérisé en ce que** le dispositif est conçu pour tenir une statistique sur l'aptitude à l'utilisation ou sur des pannes des canaux radioélectriques, le dispositif étant conformé pour utiliser, de préférence pour le premier établissement d'une communication et/ou de préférence pour un établissement renouvelé de la communication après un remplacement de canal, les canaux radioélectriques ayant par rapport à d'autres canaux électriques une possibilité d'utilisation meilleure statistiquement ou moins de pannes statistiquement.

8. Dispositif suivant l'une des revendications 5 à 7,
**caractérisé en ce que** le dispositif est conçu, au moins dans des applications dans lesquelles la communication en même temps ou quasi en même temps avec plusieurs transpondeurs RFID est prévue, pour l'utilisation de plusieurs ou de tous les canaux radioélectriques dans un laps de temps défini pour des essais d'établissement d'une communication.
